# EUROPÄISCHE PATENTANMELDUNG

(11) **EP 4 156 474 A1**
(43) Veröffentlichungstag der Anmeldung: **29.03.2023**
(21) Anmeldenummer: 22191709.9
(22) Anmeldetag: 23.08.2022
(51) Int. Cl.: H02K 7/14, H02K 21/16, H02K 21/22, H02K 16/00, H02K 1/18, D06F 58/08, D06F 37/30

(54) **ANTRIEB FÜR GERÄTE, VORZUGSWEISE FÜR HAUSHALTSGERÄTE, BESONDERS VORZUGSWEISE FÜR TROCKNER**

(30) Priorität: 27.09.2021 BE 202105755
(71) Anmelder: Miele & Cie. KG, 33332 Gütersloh (DE)
(72) Erfinder: Zajak, Martin Michael, 53639 Königswinter (DE); Putri, Aryanti Kusuma, 52072 Aachen (DE); Horstmann, Frank, 52388 Nörvenich (DE)

(57) **Zusammenfassung**

Die Erfindung betrifft einen Antrieb für Geräte, vorzugsweise für Haushaltsgeräte, besonders vorzugsweise für Trockner, mit einem ersten Motor, welcher ausgebildet ist, wenigstens eine erste Komponente des Geräts um eine Längsachse rotatorisch anzutreiben, und mit einem zweiten Motor, welcher ausgebildet ist, wenigstens eine zweite Komponente des Geräts um dieselbe Längsachse unabhängig vom erstem Motor rotatorisch anzutreiben. Der Antrieb ist dadurch gekennzeichnet, dass der erste Motor als Innenmotor radial zur Längsachse hin versetzt gegenüber dem zweiten Motor als Außenmotor angeordnet ist und der Innenmotor entlang der gemeinsamen Längsachse wenigstens abschnittsweise vom Außenmotor überlappt wird.

## Beschreibung

Die Erfindung betrifft einen Antrieb gemäß dem Oberbegriff des Patentanspruchs 1 sowie ein Gerät mit einem derartigen Antrieb gemäß dem Patentanspruch 15.

Zu den Haushaltsgeräten zählen die Wäschetrockner, um feuchte Textilien als Wäsche in sich aufzunehmen und dort mittels eines warmen Luftstroms zu trocknen. Dabei stellen Wäschetrockner spezialisierte Geräte dar, welche lediglich zum Trocknen von Wäsche geeignet sind. Kombinierte Geräte, welche die Textilien sowohl waschen als auch trocknen können, werden als Waschtrockner bezeichnet.

In jedem Fall werden die feuchten Textilien oder ähnliche andere zu trocknende Objekte von einer Person als Benutzer durch eine Öffnung des Gehäuses des Wäschetrockners bzw. des Waschtrockners, zusammen kurz Trockner genannt, in eine rotierbare Trommel des Trockners gegeben. Die Öffnung kann dann mittels einer Tür oder dergleichen verschlossen werden. Nun kann die Trocknung der Wäsche dadurch erfolgen, dass die Trommel zum Schleudern der Wäsche schnell gedreht und hierdurch mittels der Zentrifugalkraft die Feuchtigkeit aus der Wäsche nach außen gedrückt wird, so dass die Feuchtigkeit durch Durchgangsöffnungen der Trommel hindurch in einen Trommelraum des Trockners gelangen und von dort abgeführt werden bzw. abfließen kann. Dies erfolgt üblicherweise bei vergleichsweise hohen Drehzahlen, um eine möglichst starke Zentrifugalkraft mit entsprechend hoher Trocknungswirkung zu erzeugen.

Ferner kann die Trommel mit vergleichsweise niedriger Drehzahl gedreht werden, um die Wäsche innerhalb der Trommel nicht an der radialen Innenseite der Trommel anhaften sondern innerhalb der Trommel herunterfallen bzw. umherwirbeln zu lassen. Dabei wird gleichzeitig mittels eines Gebläses ein warmer Luftstrom in die Trommel geführt, um der Wäsche weitere Feuchtigkeit zu entziehen, was durch die losen Wäschestücke begünstigt werden kann. Der Luftstrom verlässt dann die Trommel abgekühlt und führt dabei Feuchtigkeit mit sich, so dass die Wäsche weiter getrocknet wird.

Somit weist ein derartiger Trockner zwei wesentliche Komponenten für den Trocknungsprozess auf, nämlich eine drehbare Trommel, um die Wäsche zu bewegen, und ein Trocknungsgebläse für die Wärmeluftzufuhr. Üblicherweise wird dies durch einen Antrieb gelöst, der die beiden Funktionen ausführen kann, sodass gegenüber der Verwendung von zwei separaten Antrieben bzw. Motoren Kosten und insbesondere Bauraum gespart werden kann. Der Antrieb ist üblicherweise über einen Riemen, üblicherweise mit Zwischentrieb, mit der Trommel verbunden. Eine Riemenscheibe an einem Ende des Antriebs und ein Gebläselaufrad am anderen, entlang der Längsachse als Dreh- bzw. Rotationsachse gegenüberliegenden Ende des Antriebs sind an einer durchgehenden Welle des Antriebs feststehend angebracht, so dass sich beim Antreiben der Trommel auch das Gebläserad mitdreht, und umgekehrt.

Beispielsweise beschreibt die EP 2 366 827 A1 eine Gebläse-Motor-Baugruppe für eine Kondensator-Wäschetrocknermaschine, umfassend: eine Antriebswelle, die drehbar mit einem Rahmen einer Wäschetrocknermaschine verbunden werden kann und dazu bestimmt ist, mittels eines Transmissionsriemens mit einer rotierenden Trommel derselben verbunden zu werden; ein Gebläse für die heiße Luft und ein Gebläse für die kalte Luft, die drehfest mit der Antriebswelle verbunden sind und so ausgelegt sind, dass sie jeweils einen Strom heißer Luft und einen Strom kalter Luft entlang getrennter Wege der Wäschetrocknermaschine befördern; einen Synchron-Permanentmagnet-Elektromotor, der einen inneren Stator, der von der Antriebswelle durchquert wird, und einen äußeren Rotor umfasst, der während der Drehung mit der Antriebswelle verbunden ist.

Nachteilig bei dieser Anordnung ist, dass die beiden Komponenten, d.h. die drehbare Trommel und das drehbare Gebläserad, nicht getrennt gesteuert werden können, da Trommel und Gebläserad einen gemeinsamen Antrieb besitzen. Dabei lässt sich ggfs. über einen Zwischentrieb der Trommel eine gewisse jedoch konstruktiv festvorgegebene Drehzahl- bzw. Drehmomentübersetzung erreichen. Dennoch dreht das Gebläserad, und zwar entsprechend schnell, stets mit, wenn die Trommel zum Schleudern mit hoher Drehzahl betrieben wird. Werden Trommel und Gebläse gemeinsam zum Trocknen der losen Wäschestücke mittels des Warmluftstroms betrieben, so sind die Drehzahlen konstruktiv miteinander fest verknüpft, so dass die Drehzahl des Gebläserads des Gebläses dahingehend begrenzt ist, die Drehzahl der Trommel gering genug zu halten, damit die Wäsche lose durcheinander gewirbelt wird und nicht aufgrund der Zentrifugalkraft an die radialen Innenseite der Trommel angedrückt wird, was die Oberfläche der Wäsche reduzieren und somit die Trocknung durch den Warmluftstrom deutlich vermindern würde.

Zur Vermeidung dieser Nachteile doch zwei separate Antriebe bzw. Motoren zu verwenden würde zwar die Möglichkeit bieten, beide Antriebe bzw. Motoren separat und damit das Gebläserad nur dann zu betreiben, wenn ein Warmluftstrom erzeugt werden soll. Auch könnten die Drehzahlen und Drehrichtungen der Antriebe bzw. Motoren unabhängig voneinander eingestellt bzw. gewählt werden, um den Trocknungsprozess mittels des Warmluftstroms zu optimieren. Mit anderen Worten kann die Verwendung von zwei unabhängig betreibbaren Antrieben zwar aufgrund der erhöhten Freiheitsgrade für den Betrieb des Trockners vorteilhaft für diesen sein. Beide Komponenten können dadurch nämlich in ihren optimalen Betriebspunkten betrieben werden. Dies würde jedoch Kosten für den zweiten Antrieb bis Motor erfordern sowie zu einem erhöhten Bedarf an Bauraum führen, weshalb dies einen Rückschritt in der Entwicklung von Trocknern darstellen würde. Dies stellt somit keine Option dar.

Es sind elektrische Antriebe der Firma Askoll EVA S.p.A. bekannt, welche eine Kombination von zwei Motoren darstellen, um als Antrieb der beiden Komponenten von Trocknern verwendet zu werden. Ein derartiger Antrieb besteht aus zwei Permanentmagnet-Synchronmotoren (PMSM) bzw. bürstenlosen Gleichstrommotoren (englisch: Brushless Direct Current Motor, kurz BLDC-Motor) in Außenläuferanordnung, d.h. der Stator ist an der Innenseite und der Rotor ist an der Außenseite angeordnet, welche auf einer Welle nebeneinander angeordnet sind. Somit ist eine Kombination von zwei Motoren, besonders von PMSM bzw. BLDC, als gemeinsamer Antrieb mit Rotoren als Außenläufer in einer koaxialen Anordnung mit einer Trennung durch ein nichtmagnetisches Material zwischen den Statoren der beiden Motoren bekannt.

Derartige Antriebe können bei einem Trockner mit einem Außenläufer als Gebläseantrieb und einem Außenläufer als Trommelantrieb eingesetzt werden. Der Außenläufer des Trommelantriebs kann eine geringere Drehzahl bzw. ein höheres Drehmoment als der Außenläufer des Gebläseantriebs aufweisen. Die Rotoren der Außenläufer bestehen aus einem glockenförmigen Formteil, in welchem an der Innenseite Magneten angebracht sind. Ferner ist eine Glocke mit einer Riemenscheibe verbunden. Die Riemenscheibe kann in Kombination mit der Glocke ein Formteil oder ein separates Teil sein, welches an der Rotationsachse der Glocke angebracht ist.

Auch in diesem Fall können Trommel und Gebläserad unabhängig voneinander mit jeweils einem eigenen Motor betrieben werden, was jedoch zu den erhöhten Kosten von zwei Motoren führt. Auch ist weiterhin ein vergleichsweise großer Bauraum für zwei Motoren erforderlich, da die beiden Motoren des Antriebs entlang der Längsachse nebeneinander angeordnet sind.

Der Erfindung stellt sich somit das Problem, einen Antrieb für Geräte, vorzugsweise für Haushaltsgeräte, besonders vorzugsweise für Trockner, zur Verfügung zu stellen, so dass wenigstens zwei Komponenten eines Gerätes separat und unabhängig voneinander betrieben werden können, jedoch gleichzeitig eine kompakte Anordnung des Antriebs bzw. seiner Elemente erreicht werden kann. Insbesondere sollen die Komponenten unabhängig voneinander mit unterschiedlichen Drehzahlen und bzw. oder Drehrichtungen betrieben werden können. Zusätzlich oder alternativ soll der Antrieb bei Verwendung in einem Trockner eine Drehzahlverringerung und bzw. oder eine Drehmomenterhöhung der Trommel gegenüber dem Gebläse ermöglichen können. Zumindest soll eine Alternative zu bekannten Antrieben für Geräte, vorzugsweise für Haushaltsgeräte, besonders vorzugsweise für Trockner, geschaffen werden.

Erfindungsgemäß wird dieses Problem durch einen Antrieb mit den Merkmalen des Patentanspruchs 1 sowie durch ein Gerät mit den Merkmalen des Patentanspruchs 15 gelöst. Vorteilhafte Ausgestaltungen und Weiterbildungen der Erfindung ergeben sich aus den nachfolgenden Unteransprüchen.

Somit betrifft die Erfindung einen Antrieb für Geräte, vorzugsweise für Haushaltsgeräte, besonders vorzugsweise für Trockner, mit einem ersten Motor, welcher ausgebildet ist, wenigstens eine erste Komponente des Geräts um eine Längsachse rotatorisch anzutreiben, und mit einem zweiten Motor, welcher ausgebildet ist, wenigstens eine zweite Komponente des Geräts um dieselbe Längsachse unabhängig vom erstem Motor rotatorisch anzutreiben. Derartige Geräte können jegliche Geräte sein, welche eine Funktion aufweisen, welche mittels eines rotatorischen Antriebs umgesetzt werden kann, welcher zwei unabhängig voneinander betreibbare bzw. steuerbare elektrische Motoren aufweist.

Der Antrieb ist dadurch gekennzeichnet, dass der erste Motor als Innenmotor radial zur Längsachse hin versetzt gegenüber dem zweiten Motor als Außenmotor angeordnet ist und der Innenmotor entlang der gemeinsamen Längsachse wenigstens abschnittsweise vom Außenmotor überlappt wird. Mit anderen Worten sind die beiden Motoren des Antriebs einander zumindest abschnittsweise radial überlappend gegenüber einer gemeinsamen Längsachse angeordnet, um welche beide Motoren eine Drehbewegung ausführen können.

Der vorliegenden Erfindung liegt dabei die Erkenntnis zugrunde, dass ein Antrieb mit zwei unabhängig betreibbaren bzw. steuerbaren Motoren den unabhängigen Betrieb der beiden Motoren sowohl hinsichtlich der Drehzahl als auch der Drehrichtung ermöglichen kann. Somit können die beiden Motoren bzw. deren Komponenten für ihre optimalen Betriebspunkte ausgelegt werden, welche sich aus der jeweiligen Verwendung ergeben. Auch kann bei Verwendung des erfindungsgemäßen Antriebs bei einem Trockner die Trommel reversierend betrieben werden.

Ferner können die beiden Motoren des Antriebs hinsichtlich ihres Drehmoments konstruktiv unterschiedlich ausgelegt werden. Insbesondere kann der Außenmotor aufgrund seines größeren Durchmessers ein höheres Drehmoment und eine geringere Drehzahl als der Innenmotor aufweisen. Dies kann bei einer Verwendung des erfindungsgemäßen Antriebs bei einem Trockner die Belastung für einen Riemen, welcher die Drehbewegung des Außenmotors auf die Trommel übertragen kann, geringhalten, was die Lebensdauer des Riemens erhöhen kann.

Des Weiteren kann die radial zumindest teilweise überlappende Anordnung der beiden Motoren des Antriebs zumindest entlang der gemeinsamen Längsachse einen dennoch vergleichsweise kompakten Aufbau des Antriebs ermöglichen, wodurch der erforderliche Bauraum zur Verwendung des Antriebs möglichst geringgehalten werden kann. Die Bauraumreduzierung entlang der gemeinsamen Längsachse kann dabei umso größer ausfallen, je größer die Überlappung der beiden Motoren ist. Ggfs. kann der erfindungsgemäße Antrieb bei Verwendung bei einem Trockner in dessen bestehendem Bodenmodul verwendet werden.

Gemäß einem Aspekt der Erfindung weist der Innenmotor einen Innenstator und einen Innenrotor auf, welche radial zur Längsachse zueinander versetzt sind und sich entlang der gemeinsamen Längsachse zumindest abschnittsweise, vorzugsweise im Wesentlichen, überlappen, und bzw. oder der Außenmotor weist einen Außenstator und einen Außenrotor auf, welche radial zur Längsachse zueinander versetzt sind und sich entlang der gemeinsamen Längsachse zumindest abschnittsweise, vorzugsweise im Wesentlichen, überlappen. Dies kann eine konkrete Umsetzung des Innenmotors bzw. des Außenmotors darstellen.

Gemäß einem weiteren Aspekt der Erfindung ist der Innenrotor radial zur Längsachse innerhalb des Innenstators angeordnet. Dies kann eine Umsetzung des Innenmotors darstellen, bei welcher die rotatorische Bewegung des Innenrotors direkt auf der Längsachse erzeugt werden kann. Dies kann insbesondere vorteilhaft sein, falls der erfindungsgemäße Antrieb bei einem Trockner verwendet wird, um mittels seines Innenmotors das Gebläserad des Trockners anzutreiben.

Gemäß einem weiteren Aspekt der Erfindung ist der Innenrotor feststehend auf einer um die Längsachse drehbaren Motorwelle angeordnet. Dies kann eine Übertragung der rotatorischen Bewegung des Innenrotors direkt auf eine Motorwelle ermöglichen.

Gemäß einem weiteren Aspekt der Erfindung ist der Innenstator feststehend an einer Halterung angeordnet. Dies kann eine Möglichkeit darstellen, den Innenstator feststehend anzuordnen.

Gemäß einem weiteren Aspekt der Erfindung ist der Innenrotor mittels einer Lagerung um die Längsachse drehbar mit der Halterung verbunden. Die Lagerung kann vorzugsweise ein oder mehrere einzelne Lager, vorzugsweise als Rillenkugellager, aufweisen. Dies kann direkt oder indirekt über eine Motorwelle des Antriebs erfolgen. Auf diese Art und Weise kann der Innenrotor drehbar mit der Halterung des feststehenden Elements des Antriebs verbunden werden.

Gemäß einem weiteren Aspekt der Erfindung ist der Außenrotor zumindest abschnittsweise radial zur Längsachse außerhalb des Außenstators angeordnet. Dies kann eine kompakte Bauweise des Antriebs begünstigen, der auf diese Art und Weise der Außenrotor den Außenstator umgeben kann, sodass auf ein Gehäuse des Antriebs verzichtet werden kann. Dies kann auch Kosten und bzw. oder Gewicht des Antriebs sparen. Auch kann hierdurch der Außenstator kompakter ausgebildet werden, da der Außenstator direkt bzw. vergleichsweise einfach mit einer Halterung des Antriebs feststehend verbunden werden kann.

Gemäß einem weiteren Aspekt der Erfindung weist der Außenrotor wenigstens einen Magneten, vorzugsweise wenigstens einen Permanentmagneten, auf, wobei der Magnet des Außenrotors radial zur Längsachse außerhalb des Außenstators und sich entlang der gemeinsamen Längsachse zumindest abschnittsweise, vorzugsweise im Wesentlichen, besonders vorzugsweise vollständig, überlappend mit dem Außenstators angeordnet ist. Dies kann eine elektromagnetische Wechselwirkung zwischen Außenstator und Außenrotor zur Erzeugung einer rotatorischen Kraft ermöglichen. Durch die Verwendung von Permanentmagneten kann auf eine elektrisch leitfähige Verbindung zwischen Außenstator und Außenrotor verzichtet werden.

Gemäß einem weiteren Aspekt der Erfindung ist der Außenrotor feststehend mit einem Übertragungselement, vorzugsweise mit einer Riemenscheibe, verbunden, welches ausgebildet ist, eine Rotation des Außenrotors nach außerhalb des Antriebs, vorzugsweise mittels eines Riemens, zu übertragen. Dies kann die Übertragung der rotatorischen Bewegung des Außenrotors nach außerhalb des Antriebs ermöglichen.

Gemäß einem weiteren Aspekt der Erfindung ist der Außenstator feststehend an einer Halterung angeordnet. Dies kann eine Möglichkeit darstellen, den Außenstator feststehend anzuordnen.

Gemäß einem weiteren Aspekt der Erfindung ist der Außenrotor mittels einer Lagerung um die Längsachse drehbar mit der Halterung verbunden. Die Lagerung kann vorzugsweise ein oder mehrere einzelne Lager, vorzugsweise als Rillenkugellager, aufweisen. Auf diese Art und Weise kann der Außenrotor drehbar mit der Halterung des feststehenden Elements des Antriebs verbunden werden.

Gemäß einem weiteren Aspekt der Erfindung sind der Innenstator und der Außenstator feststehend an einer gemeinsamen Halterung angeordnet. Dies kann den Aufwand der konstruktiven Auslegung, den Bauraum, die Kosten und bzw. oder das Gewicht des Antriebs geringhalten.

Gemäß einem weiteren Aspekt der Erfindung weist die Halterung wenigstens ein erstes Halterungselement und ein zweites Halterungselement auf, welche entlang der Längsachse den Innenmotor und den Außenmotor zwischen sich aufnehmen, wobei die beiden Halterungselemente vorzugsweise feststehend miteinander verbunden, vorzugsweise verschraubt, sind. Dies kann die Herstellung der Halterung vereinfachen.

Gemäß einem weiteren Aspekt der Erfindung ist die Halterung ausgebildet, mit einem Antriebshalter des Gerätes feststehend verbunden zu werden. Dies kann den Einbau des Antriebs in dem entsprechenden Gerät vereinfachen.

Die vorliegende Erfindung betrifft auch ein Gerät, vorzugsweise ein Haushaltsgerät, besonders vorzugsweise einen Trockner, mit wenigstens einem Antrieb wie zuvor beschrieben. Hierdurch kann ein Gerät geschaffen werden, um dort die Eigenschaften und Vorteile eines erfindungsgemäßen Antriebs wie zuvor beschrieben umzusetzen und zu nutzen.

Ein Ausführungsbeispiel der Erfindung ist in den Zeichnungen rein schematisch dargestellt und wird nachfolgend näher beschrieben. Es zeigt
- Figur 1: einen Längsschnitt durch einen erfindungsgemäßen Antrieb; und
- Figur 2: eine Seitenansicht des erfindungsgemäßen Antriebs in einem erfindungsgemäßen Gerät.

Die o.g. Figuren werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung (nicht dargestellt).

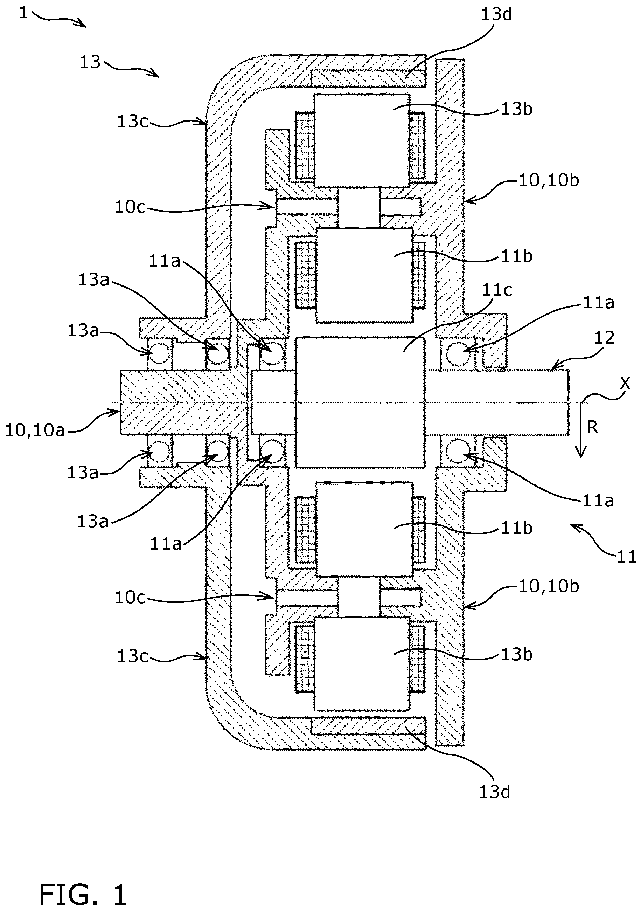

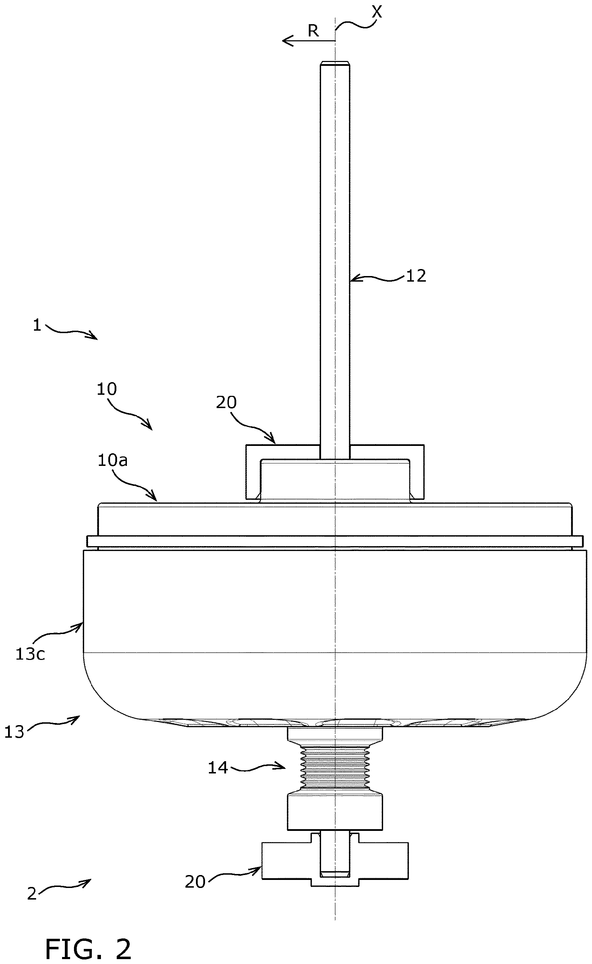

Ein erfindungsgemäßer Antrieb 1 gemäß der Figur 1 weist eine Halterung 10 auf, welche auch als Lagerschild 10 bezeichnet werden kann. Die Halterung 10 weist ein erstes, linkes Halterungselement 10a als erstes, linkes Lagerschild 10a und ein zweites, rechtes Halterungselement 10b als zweites, rechtes Lagerschild 10b auf, welche mittels mehrere Verbindungselemente 10c in Form von Schrauben 10c entlang der Längsachse X miteinander verbunden sind. Die Halterung 10 kann entlang der Längsachse X auf beiden Seiten jeweils mit einem Antriebshalter 20 eines Geräts 2, siehe Figur 2, verbunden werden. Das Gerät 2 wird am Beispiel eines Haushaltsgerätes 2 in Form eines Trockners 2 betrachtet.

Die beiden Halterungselemente 10a, 10b bilden gemeinsam einen Innenraum (nicht bezeichnet) auf der Längsachse X aus, in welchem ein erster Motor 11 als Innenmotor 11 angeordnet ist. Ein Innenstator 11b des Innenmotors 11 ist feststehend am radial äußeren Rand des Innenraums der Halterung 10 mit der Halterung 10 verbunden. Radial innenliegend zum Innenstator 11b sowie auf der Längsachse X ist ein Innenrotor 11c angeordnet, welcher feststehend mit einer Motorwelle 12 in Form einer Gebläsewelle 12 verbunden ist. Zwischen dem Innenstator 11b und dem Innenrotors 11c kann mittels elektromagnetischer Wechselwirkung eine rotatorische Relativbewegung um die Längsachse X des Innenrotors 11c gegenüber dem Innenstator 11b erzeugt werden. Die Gebläsewelle 12 ist über ein Paar von Lagerungen 11a, welche jeweils auf einer Seite des Innenrotors 11c angeordnet sind, um die Längsachse X drehbar mit der Halterung 10 verbunden. Über die Gebläsewelle 12 kann die Drehung des Innenrotors 11c auf ein Gebläse (nicht dargestellt) des Trockners 2 übertragen werden.

Die beiden Halterungselemente 10a, 10b bilden radial nach außen zeigend eine U-förmige Aufnahme (nicht bezeichnet) aus, welche einen zweiten Motor 13 als Außenmotor 13 aufnimmt. Ein Außenstator 13b des Außenrotors 13 ist feststehend nach radial außen zeigend in der U-förmigen Aufnahme der Halterung angeordnet. Um den Außenstator 13b sowie um das erste, linke Halterungselement 10a herum erstreckt sich ein glockenförmiger Außenrotors 13c. Radial außenliegend zu dem Außenstator 13b weist der Außenrotors 13c eine Mehrzahl von Magneten 13d in Form von Permanentmagneten 13d auf, welche in der Umfangsrichtung durchgängig angeordnet sind. An seinem schmalen Ende ist der Außenrotors 13c über ein Paar von Lagerungen 13a um die Längsachse X drehbar mit der Halterung 10 bzw. dessen ersten, linken Halterungselement 10a verbunden. Zwischen dem Außenstator 13b und dem Außenrotor 13c kann mittels elektromagnetischer Wechselwirkung eine rotatorische Relativbewegung um die Längsachse X des Außenrotors 13c gegenüber dem Außenstator 13b erzeugt werden. Mittels eines Übertragungselements 14 des schmalen Endes des Außenrotors 13c in Form einer Riemenscheibe 14 kann die Drehung des Außenrotors 13 c auf eine Trommel (nicht dargestellt) des Trockners 2 übertragen werden.

Somit können die beiden Motoren 11, 13 des erfindungsgemäßen Antriebs 1 unabhängig voneinander betrieben werden, was sowohl die Drehrichtung als auch die Drehzahl betrifft. Insbesondere können die beiden Motoren 11, 13 gleichzeitig oder auch nur einzeln sowie reversierend betrieben und genutzt werden. Entsprechend können die beiden Motoren 11, 13 auf die Funktionen des Trockners 2 konstruktiv abgestimmt und entsprechend betrieben werden. Insbesondere kann der Außenrotors 13 zum Drehen der Trommel des Trockners 2 aufgrund seines vergleichsweise großen Durchmessers ein vergleichsweise großes Drehmoment gegenüber dem einen Motor 11 aufweisen, welche lediglich ein Gebläserad (nicht dargestellt) des Gebläses des Trockners 2 drehen können muss.

Ferner kann durch die im Wesentlichen überlappende Anordnung der beiden Motoren 11, 13 und insbesondere durch die vollständige Überlappung des Innenmotors 11 und des Außenstators 13b eine besonders kompakte Anordnung geschaffen werden, welche den Bauraum entlang der Längsachse X minimieren und auf das Maß reduzieren kann, welches bisher von einem einzelnen Motor eingenommen wird. Auch in der radialen Richtung R kann die Größe des erfindungsgemäßen Antriebs 1 vergleichsweise geringgehalten werden, indem sowohl der Innenstator 11b als auch der Außenstator 13b in einem gemeinsamen Bereich der Halterung 10 angeordnet werden können. Auch kann der Außenrotors 13c einen wesentlichen Außenbereich des Antriebs 1 bilden, sodass auf ein zusätzliches Gehäuse verzichtet werden kann. Dies kann jeweils auch Kosten in der Herstellung sowie Gewicht sparen.

### Bezugszeichenliste (Bestandteil der Beschreibung)

- R: radiale Richtung
- X: Längsachse

- 1: Antrieb
- 10: Halterung; Lagerschild
- 10a: erstes, linkes Halterungselement; erstes, linkes Lagerschild
- 10b: zweites, rechtes Halterungselement; zweites, rechtes Lagerschild
- 10c: Verbindungselemente; Schrauben
- 11: erster Motor; Innenmotor
- 11a: Lagerung
- 11b: Innenstator
- 11c: Innenrotor
- 12: Motorwelle; Gebläsewelle
- 13: zweiter Motor; Außenmotor
- 13a: Lagerung
- 13b: Außenstator
- 13c: Außenrotor
- 13d: Magnete bzw. Permanentmagnete des Außenrotors 13c
- 14: Übertragungselement; Riemenscheibe

- 2: Gerät; Haushaltsgerät; Trockner
- 20: Antriebshalter

## Patentansprüche

1. Antrieb (1) für Geräte (2), vorzugsweise für Haushaltsgeräte (2), besonders vorzugsweise für Trockner (2),
mit einem ersten Motor (11), welcher ausgebildet ist, wenigstens eine erste Komponente des Geräts (2) um eine Längsachse (X) rotatorisch anzutreiben, und
mit einem zweiten Motor (13), welcher ausgebildet ist, wenigstens eine zweite Komponente des Geräts (2) um dieselbe Längsachse (X) unabhängig vom erstem Motor (11) rotatorisch anzutreiben,
**dadurch gekennzeichnet, dass**
der erste Motor (11) als Innenmotor (11) radial zur Längsachse (X) hin versetzt gegenüber dem zweiten Motor (13) als Außenmotor (13) angeordnet ist und
der Innenmotor (11) entlang der gemeinsamen Längsachse (X) wenigstens abschnittsweise vom Außenmotor (13) überlappt wird.

2. Antrieb (1) nach Anspruch 1, **dadurch gekennzeichnet, dass**
der Innenmotor (11) einen Innenstator (11b) und einen Innenrotor (11c) aufweist, welche radial zur Längsachse (X) zueinander versetzt sind und sich entlang der gemeinsamen Längsachse (X) zumindest abschnittsweise, vorzugsweise im Wesentlichen, überlappen, und/oder
der Außenmotor (13) einen Außenstator (13b) und einen Außenrotor (13c) aufweist, welche radial zur Längsachse (X) zueinander versetzt sind und sich entlang der gemeinsamen Längsachse (X) zumindest abschnittsweise, vorzugsweise im Wesentlichen, überlappen.

3. Antrieb (1) nach Anspruch 2, **dadurch gekennzeichnet, dass**
der Innenrotor (11c) radial zur Längsachse (X) innerhalb des Innenstators (11b) angeordnet ist.

4. Antrieb (1) nach Anspruch 2 oder 3, **dadurch gekennzeichnet, dass**
der Innenrotor (11c) feststehend auf einer um die Längsachse (X) drehbaren Motorwelle (12) angeordnet ist.

5. Antrieb (1) nach einem der Ansprüche 2 bis 4, **dadurch gekennzeichnet, dass**
der Innenstator (11b) feststehend an einer Halterung (10) angeordnet ist.

6. Antrieb (1) nach Anspruch 5, **dadurch gekennzeichnet, dass**
der Innenrotor (11c) mittels einer Lagerung (11a) um die Längsachse (X) drehbar mit der Halterung (10) verbunden ist.

7. Antrieb (1) nach einem der Ansprüche 2 bis 6, **dadurch gekennzeichnet, dass**
der Außenrotor (13c) zumindest abschnittsweise radial zur Längsachse (X) außerhalb des Außenstators (13b) angeordnet ist.

8. Antrieb (1) nach Anspruch 7, **dadurch gekennzeichnet, dass**
der Außenrotor (13c) wenigstens einen Magneten (13d), vorzugsweise wenigstens einen Permanentmagneten (13d), aufweist,
wobei der Magnet (13d) des Außenrotors (13c) radial zur Längsachse (X) außerhalb des Außenstators (13b) und sich entlang der gemeinsamen Längsachse (X) zumindest abschnittsweise, vorzugsweise im Wesentlichen, besonders vorzugsweise vollständig, überlappend mit dem Außenstators (13b) angeordnet ist.

9. Antrieb (1) nach einem der Ansprüche 2 bis 8, **dadurch gekennzeichnet, dass**
der Außenrotor (13c) feststehend mit einem Übertragungselement (14), vorzugsweise mit einer Riemenscheibe (14), verbunden ist, welches ausgebildet ist, eine Rotation des Außenrotors (13c) nach außerhalb des Antriebs (1), vorzugsweise mittels eines Riemens, zu übertragen.

10. Antrieb (1) nach einem der Ansprüche 2 bis 9, **dadurch gekennzeichnet, dass**
der Außenstator (13b) feststehend an einer Halterung (10) angeordnet ist.

11. Antrieb (1) nach Anspruch 10, **dadurch gekennzeichnet, dass**
der Außenrotor (13c) mittels einer Lagerung (13a) um die Längsachse (X) drehbar mit der Halterung (10) verbunden ist.

12. Antrieb (1) nach einem der Ansprüche 2 bis 11, **dadurch gekennzeichnet, dass**
der Innenstator (11b) und der Außenstator (13b) feststehend an einer gemeinsamen Halterung (10) angeordnet sind.

13. Antrieb (1) nach Anspruch 12, **dadurch gekennzeichnet, dass**
die Halterung (10) wenigstens ein erstes Halterungselement (10a) und ein zweites Halterungselement (10b) aufweist, welche entlang der Längsachse (X) den Innenmotor (11) und den Außenmotor (13) zwischen sich aufnehmen,
wobei die beiden Halterungselemente (10a, 10b) vorzugsweise feststehend miteinander verbunden, vorzugsweise verschraubt, sind.

14. Antrieb (1) nach einem der Ansprüche 5, 6 und 10 bis 13, **dadurch gekennzeichnet, dass**
die Halterung (10) ausgebildet ist, mit einem Antriebshalter (20) des Gerätes (2) feststehend verbunden zu werden.

15. Gerät (2), vorzugsweise Haushaltsgerät (2), besonders vorzugsweise Trockner (2), mit wenigstens einem Antrieb (1) nach einem der vorangehenden Ansprüche.
